Europäisches Patentamt

European Patent Office

Office européen des brevets

(19)

(11)  **EP 0 571 016 B1**

(12)  **EUROPEAN PATENT SPECIFICATION**

(45) Date of publication and mention
of the grant of the patent:
**17.09.1997  Bulletin 1997/38**

(51) Int Cl.[6]: **G11B 7/125**, G11B 7/00,
G11B 11/10

(21) Application number: **93201333.7**

(22) Date of filing: **07.05.1993**

(54) **Method of and device for recording information on a record carrier having a recording layer which, when heated, undergoes an optically detectable change**

Verfahren und Einrichtung zur Aufzeichnung von Information auf einem Aufzeignungsträger mit einer Aufzeichnungsschicht, die bei Erwärmung eine optisch detektierbare Veränderung erfährt

Procédé et dispositif d'enregistrement d'information sur un support d'enregistrement pourvu d'une couche d'enregistrement qui subit un changement lors de son chauffage

(84) Designated Contracting States:
**BE DE ES FR GB IT**

(30) Priority: **13.05.1992  EP 92201361**

(43) Date of publication of application:
**24.11.1993  Bulletin 1993/47**

(73) Proprietor: **Philips Electronics N.V.
5621 BA Eindhoven (NL)**

(72) Inventors:
• **Spruit, Johannes Hendrikus Maria
NL-5656 AA Eindhoven (NL)**
• **Jacobs, Bernardus Antonius Johannes
NL-5656 AA Eindhoven (NL)**

• **Bardoel, Wilhelmus Hendrikus Antonius Maria
NL-5656 AA Eindhoven (NL)**

(74) Representative:
**Groenendaal, Antonius Wilhelmus Maria et al
INTERNATIONAAL OCTROOIBUREAU B.V.,
Prof. Holstlaan 6
5656 AA Eindhoven (NL)**

(56) References cited:
**DE-A- 3 804 240**

• **PATENT ABSTRACTS OF JAPAN vol. 15, no. 207 (P-1207)28 May 1991 & JP-A-30 54 739**
• **PATENT ABSTRACTS OF JAPAN vol. 13, no. 438 (P-939)3 October 1989 & JP-A-11 66 343**

**Description**

The invention relates to a method of recording information on a record carrier having a recording layer in which an optically detectable change can be realised by heating said layer, in which method the recording layer is scanned by means of a radiation beam whose power is modulated in accordance with a pulse pattern related to the information to be recorded, said pulse pattern comprising pulses which have a high power level and alternate with intervals which have a low power level, and in which method the value of the power within each radiation pulse decreases in order to compensate for the temperature rise which is caused by the power applied to the recording layer during the previous part of the relevant radiation pulse.

The invention also relates to a device for recording information on a record carrier having a recording layer in which an optically detectable change can be realised by heating said layer, which device comprises a radiation source for generating a radiation beam, scanning means for scanning the recording layer by means of the radiation beam, a write signal generating circuit for converting an information signal into a write signal having a pulse pattern, said pulse pattern comprising pulses which have a high signal level and alternate with intervals which have a low signal level, the signal level within the pulses decreasing, and a control circuit for setting the instantaneous value of the power of the radiation beam to a value which is fixed by the instantaneous signal level of the write signal.

A method and device of the type described in the opening paragraphs are known from US-4,894,816. In the known method and device the recording layer is scanned by means of a radiation beam in the form of a laser beam whose power is modulated in a pulsatory manner. During each radiation pulse the recording layer is heated above a write temperature above which the recording layer undergoes an optically detectable change. During the intervals the temperature in the recording layer drops below the write temperature. Thus, an information pattern of areas having changed optical properties is obtained. The initial value of each radiation pulse is exponentially dependent on the length of the previous interval. Within the radiation pulse itself the power decreases exponentially as a function of time. It is thereby achieved that during the formation of areas having changed properties the temperature in the scanned portion of the recording layer is maintained at substantially the same level, which means that the dimensions of the areas provided are well defined. The jitter in the read signal during reading an information pattern which consists of such areas with optically detectable changes is then small, which renders a high information density on the record carrier possible. In the known method the power of the radiation pulse is constant during the intervals.

When recording information by means of a laser beam having a modulated radiation power, the aim is a method in which the peak power of the radiation beam will not become needlessly high. In fact, the lifetime of the laser is negatively influenced by the use at higher powers.

The invention has, *inter alia*, for its object to provide means with which lower peak powers in the modulated radiation beam are sufficient during the recording operation.

In a method as described in the opening paragraph this object is achieved in that the power increases within an interval of low level in order to maintain the temperature at the scanning area at a more uniform level within the intervals.

In a device as described in the opening paragraph this object is achieved in that the write signal generating circuit is adapted to generate the write signal with a signal value which increases within the relevant interval of low level.

Consequently, the temperature at the end of the interval will have decreased to a lesser extent than in the prior-art method. As a result, a lower value will be sufficient for the initial value (peak value) of the power of the next radiation pulse. In fact, due to the higher temperature at the end of the interval the temperature difference to be bridged has been reduced. Moreover, a better compensation of the temperature influence is obtained, because the temperature influence of the radiation pulses and of the intervals is compensated for.

An embodiment of the method is characterized in that a square-wave bivalent control signal for setting the radiation power is generated, in which a measure of the influence of the variation of the radiation power on the temperature at the scanning area is determined on the basis of this control signal, and in that the signal value of the square-wave control signal is adapted in dependence upon the determined measure, the power of the radiation beam being set to a value which corresponds to the signal value of the adapted control signal.

This embodiment has the advantage that the influence of the complete previous pulse pattern on the temperature at the scanning area can be compensated for.

This renders the method also suitable for recording operations in which contiguous areas with the optically detectable changes are obtained by means of short radiation pulses succeeding each other with short intervals. This is in contrast to the method known from said United States Patent. In this known method the initial value of the radiation pulse is only dependent on the length of the directly preceding interval. In other words, the influence of the previous radiation pulses is not compensated for. However, in view of the small time differences between the successive radiation pulses, this is a considerable influence.

An embodiment of the method which can be easily realised is characterized in that said measure is obtained by means of a convolution of a signal related to the square-wave control signal and having a function whose signal value decreases as a function of time.

An optimum compensation is obtained in a method which is characterized in that the time function is an exponentially decreasing function.

In fact, the influence of a radiation pulse on the temperature at the scanning area appears to decrease substantially exponentially as a function of the elapsed time.

These and other aspects of the invention will be apparent from and elucidated with reference to the embodiments described hereinafter.

In the drawings

Figs. 1 and 3b show a record carrier for use with the method according to the invention,

Fig. 2 shows the temperature variation within the recording layer as a result of a radiation pulse,

Fig. 3a shows the temperature at the scanning area as a result of a radiation pulse,

Fig. 4a shows the variation of the radiation power of the radiation beam in a known recording method,

Fig. 4b shows the temperature variation at the scanning area, associated with the known method,

Figs. 5a and 6 show the variation of the radiation power of the radiation beam in an embodiment of a recording method according to the invention,

Fig. 5b shows the temperature variation at the scanning area, associated with the radiation variation shown in Fig. 5a,

Fig. 7 shows an embodiment of a device according to the invention,

Figs. 8 and 9 show embodiments of circuits used in the device according to the invention, and

Fig. 10 shows a number of signals as a function of time to illustrate the invention.

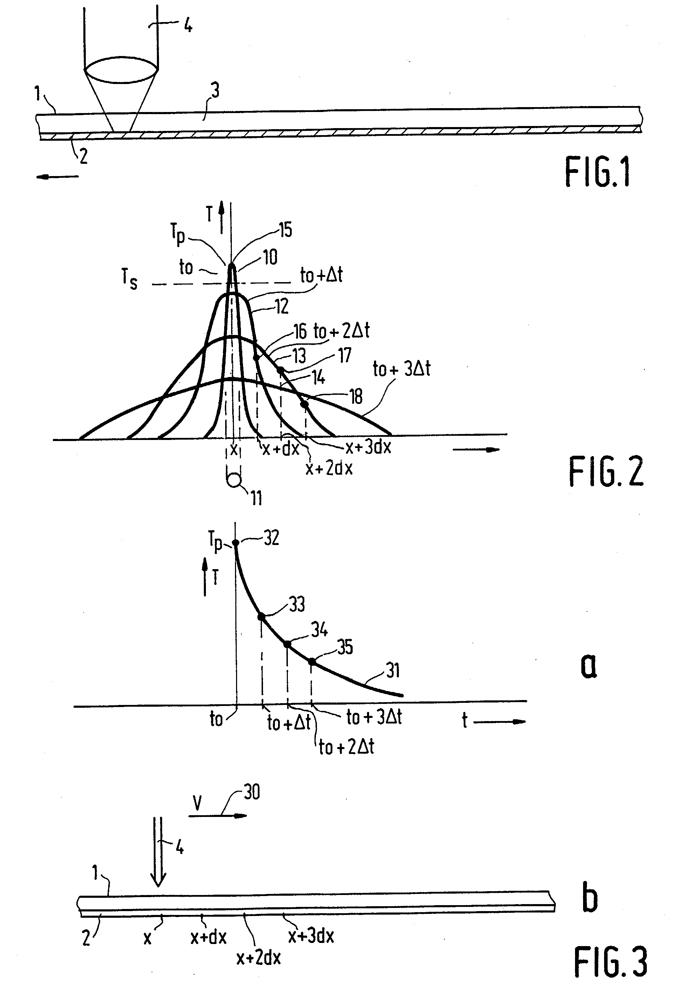

Fig. 1 shows a record carrier 1 having a recording layer 2 which is provided on a substrate 3 of, for example transparent material. The recording layer 2 is of a conventional type which undergoes an optically detectable change when it is heated above a write temperature. The recording layer 2 may comprise a "phase-change" material in which the structure in an area can be changed from amorphous to crystalline, or conversely, by supplying heat. The recording layer 2 may also comprise a magneto-optical material in which a domain having an optically detectable change of the magnetization can be provided by subjecting the material generally to the influence of a magnetic field and simultaneously heat the material locally. The recording layer can be heated by means of a radiation beam whose power is high enough to heat the recording layer 2 above the write temperature. A pattern of areas having optically detectable changes can be provided by scanning the recording layer 2 with the radiation beam 4 and modulating the power in such a pulsatory manner that pulses having a power which is high enough to heat the scanned area above the write temperature alternate with intervals in which the power is insufficient to heat the scanned area above the write temperature. Thus, an information pattern consisting of areas which have optically detectable changes and alternate with unchanged areas is provided in the recording layer. The areas with optically detectable changes will hereinafter be briefly referred to as effects. The magnitude of the effects is determined by the size of the area which is heated above the write temperature. The size of this area is considerably dependent on the temperature at the scanning area, which will be illustrated with reference to Fig. 2.

Fig. 2 shows the temperature variation in the recording layer 2 as a function of the distance r to the centre of the scanning point at different instants, if the recording layer is heated by means of a short radiation pulse. The reference numeral 10 denotes the temperature variation at the instant tO at the end of the radiation pulse. The portion of the recording layer at a temperature above the write temperature Ts undergoes the optically detectable change. The effect thus obtained is denoted by reference numeral 11. The heat applied to the recording layer spreads over the recording layer, with the result that the temperature at the location of the scanning area decreases and the temperature in the vicinity of the scanning area increases. The temperature division at the equidistant instants t0 + dt, t0 + 2.dt and t0 + 3.dt is denoted by the reference numerals 12, 13 and 14, respectively.

The magnitude of the effect is determined by the magnitude of the area heated above the write temperature Ts. The size of this area generally increases when the temperature Tp at the location of the centre of the scanned portion of the recording layer 2 increases. This centre will be further referred to as the scanning centre. The temperature Tp is determined by the initial temperature of the recording layer which directly precedes the radiation pulse, supplemented with the temperature rise as a result of the radiation pulse The initial temperature is influenced by the variation of the radiation power in the directly preceding time interval.

This influence will be illustrated with reference to Figs. 3a and 3b. Fig. 3b shows the scanning radiation beam 4 which moves at a constant rate v with respect to the recording layer 2 in the direction denoted by an arrow 30. At instant to the radiation beam 4 is in position x. At this instant the radiation power is increased for a short time so that the temperature in the centre of the scanned area rises to Tp. In Fig. 2 this temperature is denoted by a dot 15 on the curve 10. The heat applied to the recording layer subsequently spreads across the record carrier. At the instant t0 + dt when the radiation beam scans position x + dx, the recording layer is heated *in situ* to a value which is denoted by a dot 16 on the curve 12 in Fig. 2. The temperatures at the instants t0 + 2.dt and t0 + 3.dt when the radiation beam 4 scans the positions x + 2.dx and x + 3.dx are denoted in Fig. 2 by dots 17 and 18, respectively. Fig. 3a shows the associated variation of the temperature T as a function of time by means of a curve 31. The dots 32, 33, 34 and 35 on the curve 31 correspond to the dots 15, 16, 17 and 18 in Fig. 2. The curve 31 in Fig. 3a can be satisfactorily approximated by an exponentially decreasing function having a time constant which approximately decreases at an increasing scanning rate in accordance with a quadratic function of the scanning rate v.

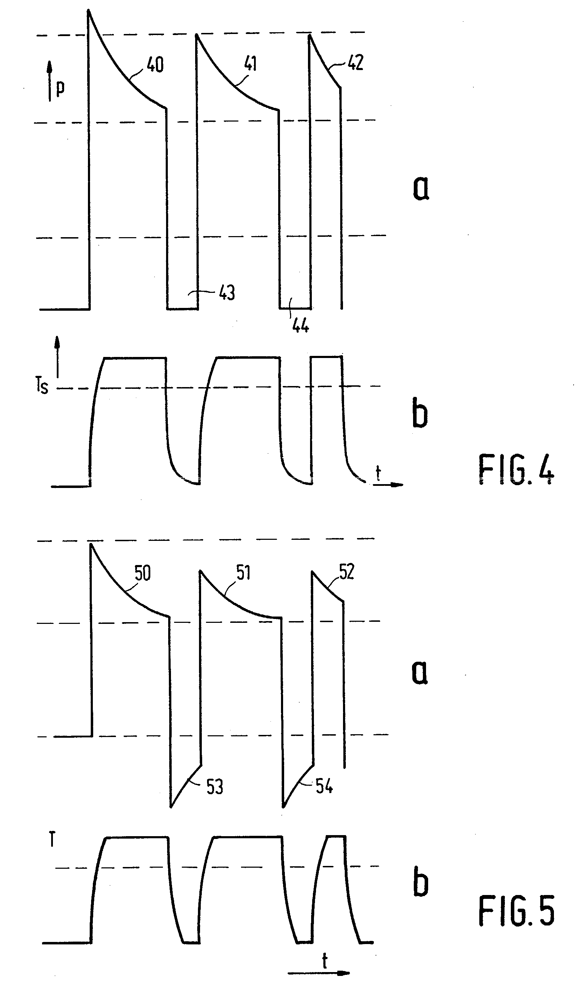

Fig. 4a shows the pulsatory variation of the radiation power P in the prior-art method as described in US-4,894,816. The reference numerals 40, 41 and 42 denote the different radiation pulses. During the radiation pulses the power decreases in order to compensate for the temperature rise resulting from the transport of heat previously applied to the scanning area. Consequently, the temperature in the scanning centre is maintained constant. In Fig. 4b the temperature T is shown as a function of time t at the location of the scanning point. In the intervals denoted by the reference numerals 43 and 44 the power of the radiation beam is maintained constant at a low level. The temperature in the scanning centre decreases as a function of time. The temperature directly before the start of a subsequent pulse depends on the length of the interval. As it is desirable that the temperature is equal for all effects when applying the effects, the temperature difference to be bridged at the start of the radiation pulse is dependent on the temperature directly before the radiation pulse and is thus dependent on the length of the previous interval. In the prior-art method the power at the start of the radiation pulse is therefore set in dependence upon the length of the interval. This means that the power at the start of a radiation pulse subsequent to a long interval is considerably larger than the power at the start of a radiation pulse subsequent to a short interval.

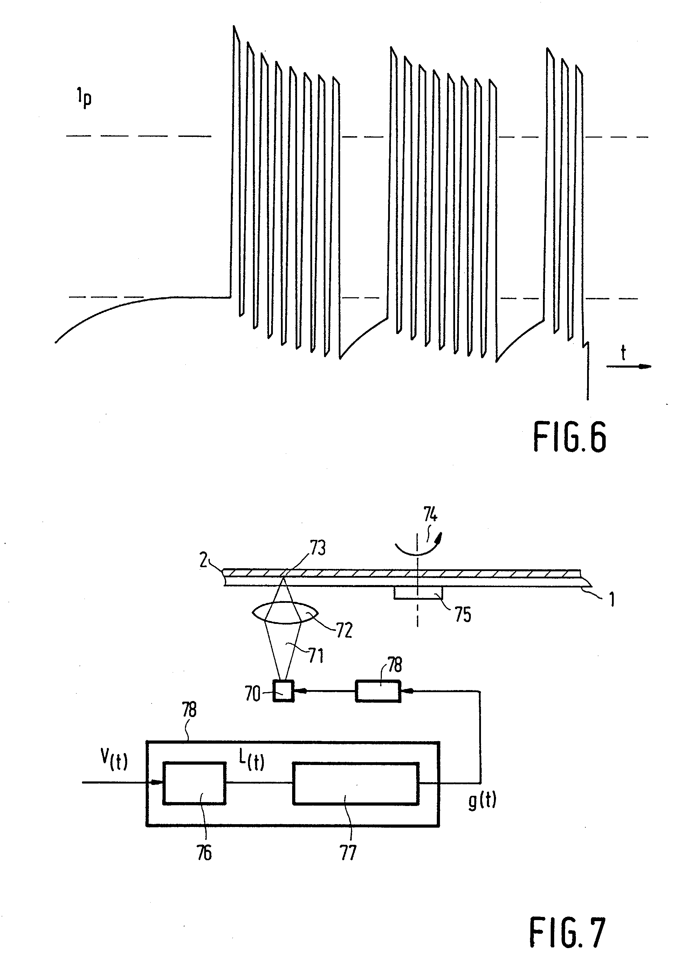

Fig. 5a shows the pulsatory variation of the power P of the radiation beam in an embodiment of the method according to the invention. The radiation pulses are denoted by the reference numerals 50, 51 and 52, while the intervals are denoted by the reference numerals 53 and 54. Fig. 5b shows the associated variation of the temperature T in the scanning centre. The power P in the intervals increases as a function of time t. The power variation in the intervals is chosen to be such that the temperature in the scanning centre remains substantially constant. As a result, the initial temperature at the end of the interval is higher than in the prior-art method, which means that the power of the radiation pulse has a lower initial value. In the embodiment shown the temperature in the scanning centre is maintained constant. It will be obvious to those skilled in the art that the reduction of the initial value is also obtained when the variation of the radiation power in the intervals increases, which does not lead to a constant temperature. For the envisaged positive effect on the initial value of the power in the radiation pulses it is essential that the decrease of temperature is at least partly inhibited. In principle, it is allowed when the temperature at the end of the interval is higher than at the start, provided that it remains sufficiently far below the write temperature Ts at the end of this interval. A constant temperature throughout the interval is optimal. Due to the fact that the temperature has not further decreased, a relatively low initial value is then sufficient, while it is guaranteed that the temperature is below the write temperature at the end of the interval. In the method according to the invention the initial value of the power in the radiation pulse can be set in dependence upon the length of the previous interval in a manner which is similar to the manner as is known from US-4,894,816 and in which the power in the intervals increases in accordance with an exponential function. Furthermore, it has appeared that with this recording mode the time constant of the power decrease in the pulse and the time constant of the power increase in the interval can be chosen to be exactly equal for recording, while the length of the effects as well as of the intervals exactly reach the correct dimensions.

During recording it is common practice to generate a square-wave bivalent control signal in which a signal value indicates the time intervals in which the temperature in the scanned portion is to be heated above the write temperature and in which the other signal level indicates the time intervals in which the temperature in the scanned portion should remain below the write temperature. In that case it is preferred to determine a measure of the influence of the variation of the radiation power on the temperature in the scanning centre on the basis of this bivalent square-wave control signal. The signal value of this control signal is then adapted by means of an adaptation value fixed by the determined measure. The instantaneous value of the power of the radiation beam is set to a value which corresponds to the signal value of the adapted control signal. In this way a substantially complete compensation can be obtained for the effect of the previous variation of the power of the scanning beam on the temperature in the scanning centre.

The adaptation value can be obtained by performing a convolution of the adapted control signal with the function shown in Fig. 3a. Such a convolution can be represented by the following equations:

$$g(t) = i(t) - a(t)$$

$$a(t) = \int_{-\infty}^{t} h(t)\ g(t-\tau)\ d\tau$$

in which:

i(t) is the square-wave bivalent control signal,
h(t) is the function shown in Fig. 3a
g(t) is the adapted control signal
a(t) is the adaptation value.

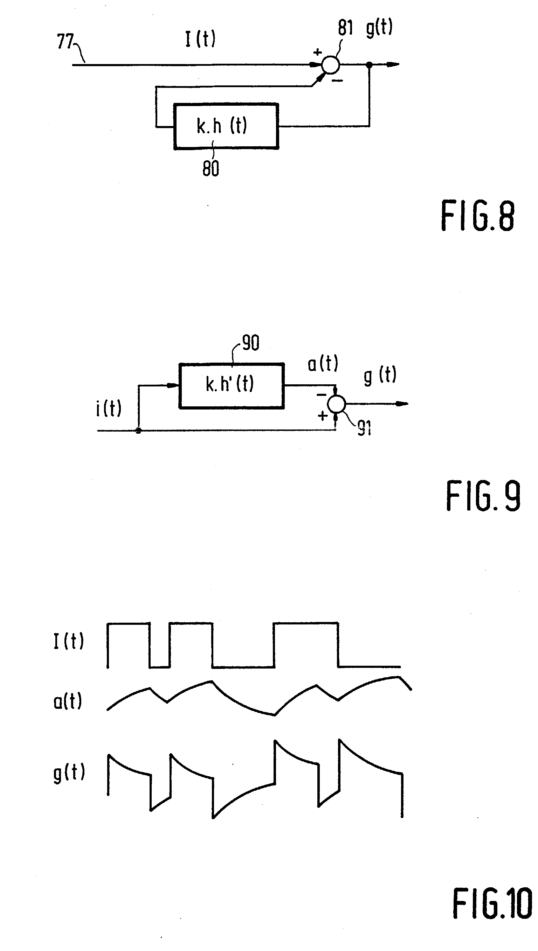

For the purpose of illustration Fig. 10 shows the signal i(t), a(t) and g(t) as a function of time.

It is alternatively possible to determine the adaptation value by means of a convolution of the bivalent signal i(t) and a function h'(t) which can be derived from h(t) and which is approximately equal to the function h(t) for small adaptation values.

The embodiments of the recording method according to the invention in which the initial power is adapted on the basis of convolutions is also very suitable for recording operations in which not one uninterrupted radiation pulse is generated for providing a single effect but in which a single effect is provided by a series of short radiation pulses succeeding each other with short intervals. For the purpose of illustration such a radiation pattern is shown in Fig. 6.

Fig. 7 shows an embodiment of a device according to the invention. The device comprises a radiation source in the form of, for example a semiconductor laser 70. The semiconductor laser 70 generates a radiation beam 71 which is directed onto the recording layer 2 of the record carrier 1 *via* an objective 72. The radiation beam 71 is focused to a small scanning spot 73 on the recording layer 2. To realise scanning of the recording layer 2, the record carrier 1 is rotated about a shaft 74 by means of a motor 75.

The device further comprises a write signal generating circuit 78 of a conventional type with which a presented information signal is converted into the write signal g(t). The circuit 78 comprises a signal converter 76 for converting the information signal v(t) into the control signal i(t). The circuit 76 may comprise, for example a 2/7 modulator which converts the information signal into a 2/7-modulated signal. However, such a circuit may alternatively comprise an EFM modulator as is used for recording CD signals. An adaptation circuit 77 converts the control signal i(t) into the write signal g(t). A control circuit 78 of a conventional type sets the instantaneous value of the power of the radiation beam to a value which is fixed by the instantaneous signal level of the write signal. The adaptation circuit 77 derives the write signal g(t) by adapting the control signal. A decrease of the signal value of the write signal g(t) within the radiation pulses and an increase of the signal value of the write signal g(t) in the intervals is realised.

Fig. 8 shows an embodiment of the circuit 77. This embodiment comprises a circuit 80 for determining the adaptation value a(t), preferably by performing a convolution between the write signal g(t) and the function h(t). However, other ways of determining the adaptation values are alternatively possible. For example, it is possible to perform the adaptation of the write signal within the radiation pulses and the intervals in a way which corresponds to the way in which the write signal within the radiation pulses is determined, as is described in US-4,894,816. The circuit 80 may consist of an analog circuit with a pulse response k.h(t). The function k.h(t) can be satisfactorily approximated by a first-order low-pass filter. Instead of using an analog circuit for the convolution, this convolution may alternatively be performed with digital circuits which may be implemented as hard-wired circuits or program-control circuits. The output of the circuit 80 supplies the adaptation value a(t). The write signal g(t) is derived from the control signal i(t) and the adaptation values a(t) by means of a combination circuit 81 of a conventional type, for example a differential amplifier.

Fig. 9 shows a further embodiment of the circuit 77 in which the adaptation values a(t) are determined by performing a convolution between the control signal i(t) and a function k.h'(t). The convolution is performed by means of a circuit 90. The adaptation values a(t) are subtracted from the control signal i(t) by means of a differential amplifier 91. The write signal g(t) can be derived again from the output of the differential amplifier.

The afore-described embodiments of the device according to the invention are suitable for recording operations in which the scanning rate is constant. However, the scanning rate is often not constant as in, for example recording operations in which the recording layer of a rotating disc-shaped record carrier is scanned with a constant angular velocity. It is to be noted that the time constant of the functions h(t) and h'(t) are dependent on the scanning rate in accordance with an approximately quadratic function.

The recording operations at which the scanning rate is not constant may simply be adapted to the changing scanning rate by adapting the function h(t) used for the convolution of the signal i(t) in dependence upon a rate signal which is indicative of the scanning rate. Such an adaptation can easily be realised by using a low-pass filter having adjustable time constants. The rate indication signal can be simply derived from the rotation frequency of the record carrier and the radial scanning position, the last-mentioned quantity being fixed, for example by the address of the scanned portion. It is alternatively possible to derive this radial position from the radial position of the scanning head by means of a position detector.

The invention has been illustrated hereinbefore for a recording method in which the effects are exclusively produced by the radiation pulses. During the intervals the temperature decreases below the write temperature so that there are no changes in the recording layer in the intervals.

However, the invention is equally suitable for recording in recording layers of the "direct-overwrite" type in which an effect of a first type can be provided by heating the layer up to a first high temperature level, and in which effects of a second type to be distinguished from the effects of the first type can be provided by heating the layer to a second, low temperature level. Such recording layers are known, *inter alia* from "Japanese Journal of Applied Physics" vol. 28, supplement 28-3, pp. 367-370 and pp. 371-374. The recording layers described in this journal relate to record carriers having an exchange-coupled multilayered magneto-optical film. In such a direct-overwrite recording layer an information pattern of effects of the first and second types can be obtained by alternately heating the recording layer at the scanning area to the high temperature level and the low temperature level by means of a radiation beam having an intensity variation as is shown in Fig. 5a or 6.

## Claims

1. A method of recording information on a record carrier having a recording layer in which an optically detectable change can be realised by heating said layer, in which method the recording layer is scanned by means of a radiation beam whose power is modulated in accordance with a pulse pattern related to the information to be recorded, said pulse pattern comprising pulses which have a high power level and alternate with intervals which have a low power level, and in which method the value of the power within each radiation pulse decreases in order to compensate for the temperature rise which is caused by the power applied to the recording layer during the previous part of the relevant radiation pulse, characterized in that the power increases within an interval in order to increase the temperature at the scanning area at the end of the interval.

2. A method as claimed in Claim 1, characterized in that a square-wave bivalent control signal for setting the radiation power is generated, in which a measure of the influence of the variation of the radiation power on the temperature at the scanning area is determined on the basis of said control signal, and in that the signal value of the square-wave control signal is adapted in dependence upon the determined measure, the power of the radiation beam being set to a value which corresponds to the signal value of the adapted control signal.

3. A method as claimed in Claim 2, characterized in that said measure is obtained by means of a convolution of a signal related to the square-wave control signal and having a time function with a decreasing amplitude.

4. A method as claimed in Claim 3, characterized in that the time function is an exponentially decreasing function.

5. A device for recording information on a record carrier having a recording layer in which an optically detectable change can be realised by heating said layer, which device comprises a radiation source for generating a radiation beam, scanning means for scanning the recording layer by means of the radiation beam, a write signal generating circuit for converting an information signal into a write signal having a pulse pattern, said pulse pattern comprising pulses which have a high signal level and alternate with intervals which have a low signal level, the signal level within the pulses decreasing, and a control circuit for setting the instantaneous value of the power of the radiation beam to a value which is fixed by the instantaneous signal level of the write signal, characterized in that the write signal generating circuit is adapted to generate the write signal with a signal value which increases within the relevant interval of low level.

6. A device as claimed in Claim 5, characterized in that the write signal generating circuit comprises signal conversion means for converting the information signal into a bivalent square-wave control signal, and estimation means for determining a measure of the influence of the variation of the radiation power on the temperature at the scanning area on the basis of said control signal, and signal adaptation means for adapting the signal value of the square-wave control signal of the determined measure, the adapted control signal being the write signal for setting the instantaneous value of the power of the radiation beam.

7. A device as claimed in Claim 6, characterized in that the estimation means comprise convolution means for performing a convolution of a signal related to the bivalent square-wave signal and having a time function with a decreasing amplitude variation.

8. A device as claimed in Claim 7, characterized in that the time function is an exponentially decreasing function.

9. A device as claimed in Claim 7, characterized in that the convolution means comprise a low-pass filter having a pulse response which corresponds to the time function.

## Patentansprüche

1. Verfahren zum Aufzeichnen von Information auf einem Aufzeichnungsträger mit einer Aufzeichnungsschicht, in der durch Erwärmen der genannten Schicht eine optisch detektierbare Änderung realisiert werden kann, in welchem Verfahren die Aufzeichnungsschicht mit Hilfe eines Strahlenbündels abgetastet wird, dessen Leistung gemäß einem mit der aufzuzeichnenden Information zusammenhängenden Impulsmuster moduliert wird, wobei das genannte Impulsmuster Impulse umfaßt, die einen hohen Leistungspegel haben und mit Intervallen abwechseln, die einen niedrigen Leistungspegel haben, und in welchem Verfahren der Wert der Leistung innerhalb jedes Strahlungsimpulses abnimmt, um den Temperaturanstieg auszugleichen, der von der der Aufzeichnungsschicht während des vorhergehenden Teils des betreffenden Strahlungsimpulses zugeführten Leistung bewirkt worden ist, dadurch gekennzeichnet, daß die Leistung innerhalb eines Intervalls ansteigt, um die Temperatur am Ort der Abtastung am Ende des Intervalls zu erhöhen.

2. Verfahren nach Anspruch 1, dadurch gekennzeichnet, daß ein rechteckförmiges zweiwertiges Steuersignal zum Einstellen der Strahlungsleistung generiert wird, wobei auf Basis des genannten Steuersignals ein Maß für den Einfluß der Veränderung der Strahlungsleistung auf die Temperatur am Ort der Abtastung bestimmt wird, und daß der Signalwert des rechteckförmigen Steuersignals in Abhängigkeit von dem bestimmten Maß angepaßt wird, wobei die Leistung des Strahlenbündels auf einen Wert eingestellt wird, der dem Signalwert des angepaßten Steuersignals entspricht.

3. Verfahren nach Anspruch 2, dadurch gekennzeichnet, daß das genannte Maß mittels einer Faltung eines mit dem rechteckförmigen Steuersignal zusammenhängenden Signals mit einer Zeitfunktion mit abnehmender Amplitude erhalten wird.

4. Verfahren nach Anspruch 3, dadurch gekennzeichnet, daß die Zeitfunktion eine exponentiell abnehmende Funktion ist.

5. Einrichtung zum Aufzeichnen von Information auf einem Aufzeichnungsträger mit einer Aufzeichnungsschicht, in der durch Erwärmen der genannten Schicht eine optisch detektierbare Änderung realisiert werden kann, welche Einrichtung eine Strahlungsquelle zum Erzeugen eines Strahlenbündels umfaßt, Abtastmittel zum Abtasten der Aufzeichnungsschicht mit Hilfe des Strahlenbündels, eine Schreibsignalgenerierschaltung zum Umsetzen eines Informationssignals in ein Schreibsignal mit einem Impulsmuster, wobei das genannte Impulsmuster Impulse umfaßt, die einen hohen Leistungspegel haben und mit Intervallen abwechseln, die einen niedrigen Leistungspegel haben, wobei der Signalpegel innerhalb der Impulse abnimmt, sowie eine Steuerschaltung zum Einstellen des Momentanwertes der Leistung des Strahlenbündels auf einen Wert, der vom momentanen Signalpegel des Schreibsignals festgelegt wird, dadurch gekennzeichnet, daß die Schreibsignalgenerierschaltung eingerichtet ist zum Generieren des Schreibsignals mit einem Signalwert, der innerhalb des betreffenden Intervalls niedrigen Pegels ansteigt.

6. Einrichtung nach Anspruch 5, dadurch gekennzeichnet, daß die Schreibsignalgenerierschaltung Signalumsetzungsmittel zum Umsetzen des Informationssignals in ein rechteckförmiges zweiwertiges Steuersignal umfaßt und Schätzmittel zum Bestimmen eines Maßes für den Einfluß der Veränderung der Strahlungsleistung auf die Temperatur am Ort der Abtastung auf Basis des genannten Steuersignals sowie Signalanpassungsmittel zum Anpassen des Signalwertes des rechteckförmigen Steuersignals mit dem bestimmten Maß, wobei das angepaßte Steuersignal das Schreibsignal zum Einstellen des Momentanwertes der Leistung des Strahlenbündels ist.

7. Einrichtung nach Anspruch 6, dadurch gekennzeichnet, daß die Schätzmittel Faltungsmittel umfassen zum Ausführen einer Faltung eines mit dem zweiwertigen Rechtecksignal zusammenhängenden Signals mit einer Zeitfunktion mit abnehmendem Amplitudenverlauf.

8. Einrichtung nach Anspruch 7, dadurch gekennzeichnet, daß die Zeitfunktion eine exponentiell abnehmende Funktion ist.

9. Einrichtung nach Anspruch 7, dadurch gekennzeichnet, daß die Faltungsmittel einen Tiefpaß mit einer der Zeitfunktion entsprechenden Impulsantwort umfassen.

**Revendications**

1. Procédé d'enregistrement d'informations sur un support d'enregistrement ayant une couche d'enregistrement dans laquelle on peut réaliser un changement optiquement détectable en chauffant ladite couche, dans lequel procédé, la couche d'enregistrement est balayée au moyen d'un faisceau de rayonnement dont la puissance est modulée conformément à un motif d'impulsions associé à l'information à enregistrer, ledit motif d'impulsions comprenant des impulsions qui ont un niveau de puissance élevé et qui alternent avec des intervalles qui ont un niveau de puissance bas, et dans lequel procédé, la valeur de la puissance dans chaque impulsion de rayonnement diminue afin de compenser l'élévation de température qui est due à la puissance appliquée à la couche d'enregistrement pendant la partie précédente de l'impulsion de rayonnement en question, caractérisé en ce que la puissance augmente dans un intervalle de manière à accroître la température au niveau de la zone de balayage à la fin de l'intervalle.

2. Procédé suivant la revendication 1, caractérisé en ce qu'un signal de commande bivalent carré servant à régler la puissance de rayonnement est généré, dans lequel procédé une mesure de l'influence de la variation de la puissance de rayonnement sur la température au niveau de la zone de balayage est déterminée sur la base de ce signal de commande, et en ce que la valeur du signal de commande carré est adaptée en fonction de la mesure déterminée, la puissance du faisceau de rayonnement étant réglée à une valeur qui correspond à la valeur du signal de commande adapté.

3. Procédé suivant la revendication 2, caractérisé en ce que ladite mesure est obtenue au moyen d'une convolution d'un signal en rapport avec le signal de commande carré et ayant une fonction temporelle à amplitude décroissante.

4. Procédé suivant la revendication 3, caractérisé en ce que la fonction temporelle est une fonction décroissant de manière exponentielle.

5. Dispositif pour enregistrer des informations sur un support d'enregistrement ayant une couche d'enregistrement dans laquelle on peut réaliser un changement optiquement détectable en chauffant ladite couche, lequel dispositif comprend une source de rayonnement pour générer un faisceau de rayonnement, un moyen de balayage pour balayer la couche d'enregistrement au moyen du faisceau de rayonnement, un circuit générateur de signaux d'écriture pour convertir un signal d'information en un signal d'écriture présentant un motif d'impulsions, ledit motif d'impulsions comprenant des impulsions qui ont un niveau de signal haut et qui alternent avec des intervalles qui ont un niveau de signal bas, le niveau de signal pendant les impulsions allant en diminuant, et un circuit de commande pour ajuster la valeur instantanée de la puissance du faisceau de rayonnement à une valeur qui est fixée par le niveau de signal instantané du signal d'écriture, caractérisé en ce que le circuit générateur de signaux d'écriture est à même de générer le signal d'écriture avec une valeur de signal qui augmente dans l'intervalle de bas niveau pertinent.

6. Dispositif suivant la revendication 5, caractérisé en ce que le circuit générateur de signaux d'écriture comprend un moyen de conversion de signal pour convertir le signal d'information en un signal de commande carré bivalent, et un moyen d'estimation pour déterminer une mesure de l'influence de la variation de la puissance de rayonnement sur la température au niveau de la zone de balayage sur la base dudit signal de commande, et un moyen d'adaptation de signal pour adapter la valeur du signal de commande carré de la mesure déterminée, le signal de commande adapté étant le signal d'écriture destiné à régler la valeur instantanée de la puissance du faisceau de rayonnement.

7. Dispositif suivant la revendication 6, caractérisé en ce que le moyen d'estimation comprend un moyen de convolution pour réaliser une convolution d'un signal associé au signal carré bivalent et ayant une fonction temporelle avec une variation d'amplitude décroissante.

8. Dispositif suivant la revendication 7, caractérisé en ce que la fonction temporelle est une fonction décroissant de manière exponentielle.

9. Dispositif suivant la revendication 7, caractérisé en ce que le moyen de convolution comprend un filtre passe-bas ayant une réponse en impulsions qui correspond à la fonction temporelle.

FIG.1

FIG.2

a

b

FIG.3

FIG.4

FIG.5

$1_p$

t

## FIG.6

V(t)   L(t)   g(t)

## FIG.7

**FIG.8**

**FIG.9**

**FIG.10**